# EUROPEAN PATENT SPECIFICATION

(11) **EP 1 396 587 B1**
(45) Date of publication and mention of the grant of the patent: **12.03.2008**
(21) Application number: 03103237.8
(22) Date of filing: 28.08.2003
(51) Int. Cl.: E03F 11/00, B65D 88/04, C02F 3/10, B65D 88/76

(54) **Tank**
Tank
Réservoir

(30) Priority: 03.09.2002 FI 20021571
(43) Date of publication of application: 10.03.2004
(73) Proprietor: Uponor Innovation AB, 513 81 Fristad (SE)
(72) Inventor: Lindner, Thomas, 45896, Gelsenkirchen (DE); Bolle, Stefan, 46562, Voerde (DE); O Neill, Stephen, 51332, Fristad (SE); Tast, Niila, 15270, Kukkila (FI)
(74) Representative: Huhtanen, Ossi Jaakko

(56) References cited:
- WO-A-01/23682
- WO-A-93/02015
- DE-A- 19 914 008
- FR-A- 900 229

## Description

### FIELD OF THE INVENTION

The invention relates to a waste water treatment tank comprising a structure for microbes used in waste water treatment and having a curved shape such that a wall of the tank forms a substantially curved surface.

### BACKGROUND OF THE INVENTION

Tanks, such as waste water tanks, come in various shapes. Typically, tanks have the shape of a cylinder or a cube. In addition to cubic tanks, other tanks having straight walls are also known. The walls of such tanks are quite difficult to make strong enough. When such tanks are made e.g. of plastic, the walls, for example, have to be considerably thick, or ribbings or other supporting structures have to be used. Furthermore, spherical or torus-shaped tanks are also known, as disclosed e.g. in WO 01/23682. The spherical or torus-shaped tanks are very strong, but it is rather difficult to insert e.g. cubic equipment, such as a fixed bed, into such tanks because the volume of the cubic equipment has to be considerably smaller than that of the spherical tank.

DE 19914008 A discloses a tank having a curved shape such that a wall of the tank forms a substantially curved surface and that the curved surface is non-uniform such that the wall of the tank is provided with a projection for helping in the lifting and handling of the tank. WO 9302015 A discloses a waste water treatment tank according to the preambule of claim 1, further comprising bags for sacks containing enzymes or nitrification bacteria.

### BRIEF DESCRIPTION OF THE INVENTION

An object of the present invention is to provide an improved tank.

The tank of the invention is characterized by the features of claim 1.

The idea underlying the invention is that the tank has a curved shape, forming a substantially curved surface, and that the curved surface is non-uniform such that the wall of the tank is provided with a projection. The idea underlying an embodiment is that the projection is provided with a tip, and the projection has a shape wherein edges run from the tip of the projection towards the curved surface of the tank. The idea of still another embodiment is that the tank is mainly spherical, further comprising eight projections, as di s-tinct from the spherical shape.

Providing the mainly curved shape with projections makes the tank strong and, in addition, it becomes rather easy to insert equipment having various shapes into the tank. A fixed bed can be inserted into the tank such that the corners of the cube settle in the projections. The internal volume of the tank does not have to be much larger than the external volume of the equipment. Furthermore, it has been unexpectedly found that a projection provided on the curved surface does not reduce the stiffness of the tank but such a projection may even make the structure of the tank stiffer.

The present application discloses a waste water treatment tank according to claim 1.

### BRIEF DESCRIPTION OF THE DRAWINGS

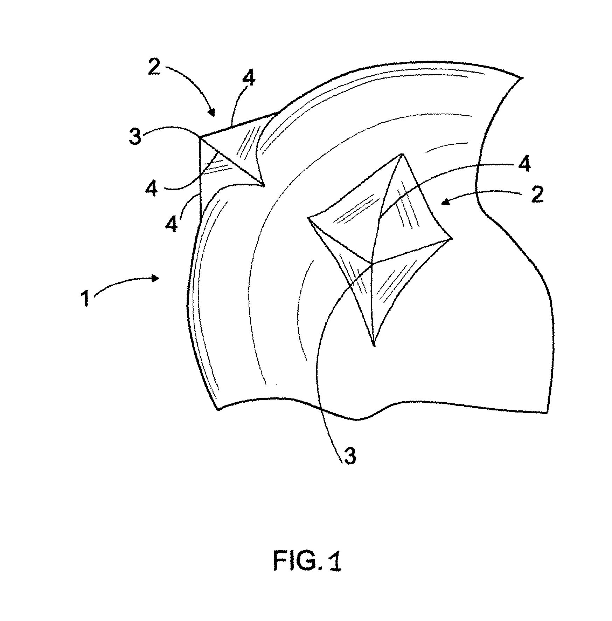

The invention will be described in closer detail in the accompanying drawing, which is a schematic view showing the upper part of a tank as seen obliquely from above.

### DETAILED DESCRIPTION OF THE INVENTION

The accompanying drawing shows a non-pressure tank to be buried in the ground. Preferably, the tank 1 is made of plastic, such as polyolefin, polyethene PE, polypropylene PP or cross-linked polyethene PEX. The tank 1 can be manufactured e.g. by rotational casting.

The tank 1 is at least partly curved in shape, forming a mainly curved surface. Preferably, the tank 1 is mainly spherical. The curved surface is non-uniform such that the tank is provided with projections 2.

Preferably, the projections 2 are provided with a tip 3 and edges 4 running from the tip 3 towards the curved surface of the tank 1. The projection 2 is preferably symmetrical, comprising four edges 4. In such a case, the projection 2 has the shape of a pyramid. When the projection at the upper part of the tank 1 is in question, the edge 4 running downwards from the tip 3 is preferably substantially vertical. In connection with the present description, directions, such as the vertical direction and the horizontal direction, are determined according to the normal operating position of the tank 1. The edge 4 directed upwards from the tip 3 of the projection 2 at the upper part of the tank 1, in turn, is directed slightly towards the upper part of the tank 1, i.e. upwards from the horizontal plane, stiffening the structure of the tank 1. The edges 4 directed sideways from the tip 3 are preferably horizontal, the angle therebetween preferably being about 90°. The angle between the edges pointing upwards and downwards, in turn, is preferably more than 90°. If the structure of the projection 2 is to be completely symmetrical, the angle between the edges 4 pointing sideways is more than 90°. In order to make the projection 2, and thus the tank 1, even stiffer, the top of the edges 4 can be provided with ribs parallel with the edge 4. The edges 4 can be straight, or they may bend inwards or outwards. Furthermore, the surface between two edges 4 may be straight, or it may bend inwards or outwards.

The tank 1 may be spherical, preferably comprising eight projections. On the inner surface of the tank, there is a protruding cavity at the projection. The tank 1 is thus capable of accommodating a large cubic object whose corners can be fitted into the projections 2. Such an object is a fixed bed for microbes used in waste water treatment. The tank 1 is then a waste water treatment tank. The spherical tank 1 thus comprises four projections at the upper edge and four projections at the lower edge. The projections 2 at the lower edge may serve as supporting legs of the tank 1. This enables the tank 1 to be easily kept in a desired position without the tank 1 being allowed to tilt while being transported, installed and used.

The drawing and the related description are only intended to illustrate the idea of the invention. In its details, the invention may vary within the scope of the claims. The tank 1 may thus have another shape than that of a sphere. The projections 2 can be arranged in connection with a torus-shaped tank, for instance. Furthermore, the tank may have a shape wherein two mainly spherical structures combine to form the final shape. The point is that the tank comprises a mainly curved surface which is provided with a projection 2 in order to make the surface non-uniform. The tank 1 may further comprise grooves and/or ribs to enhance the stiffness of the tank 1. If the projection 2 comprises a tip 3 and edges 4 extending therefrom, the number of edges 4 may be even larger than four as shown in the figure. On the other hand, the number of edges may be e.g. three, if desired, in which case the surface between the upper edges 4 may be horizontal while the edge 4 extending down- or upwards from the tip 3 may be vertical. Furthermore, in such a case, the angle between two adjacent edges 4 may be 90°.

## Claims

1. A waste water treatment tank (1) comprising a structure for microbes used in waste water treatment and having a curved shape such that a wall of the tank (1) forms a substantially curved surface, that the curved surface is non-uniform such that the wall of the tank (1) is provided with a projection (2) **characterized in that** the structure for microbes used in waste water treatment is a fixed bed, **that** at least one projection (2) is provided on the curved surface where the projection (2) is provided with a tip (3) whereby at the projection (2) there is on the inner surface of the tank a protruding cavity and **that** a corner of the fixed bed is arranged in said cavity.

2. The tank of claim 1, **characterized in that** the projection (2) comprises edges (4) running from the tip (3) towards the curved surface.

3. The tank of claim 2, **characterized in that** the projection (2) has the shape of a pyramid.

4. The tank of claim 2 or 3, **characterized in that** the projection (2) comprises four edges.

5. The tank of any one of the preceding claims, **characterized in that** the tank (1) is mainly spherical, comprising eight projections (2).

6. The tank of any one of the preceding claims, **characterized in that** the tank (1) is made of plastic.

## Patentansprüche

1. Abwasseraufbereitungstank (1) mit einer Struktur für bei der Abwasseraufbereitung verwendeten Mikroben und mit einer gebogenen Form, so dass eine Wand des Tanks (1) eine im wesentlichen gebogene Oberfläche bildet, dass die gebogene Oberfläche nicht gleichmäßig ist, wobei die Wand des Tanks (1) mit einem Vorsprung (2) versehen ist, **dadurch gekennzeichnet, dass** die Struktur für bei der Abwasseraufbereitung verwendete Mikroben ein Festbett ist, dass mindestens ein Vorsprung (2) an der gebogenen Oberfläche vorgesehen ist, wobei der Vorsprung (2) mit einer Spitze (3) versehen ist, wobei an dem Vorsprung (2) auf der Innenfläche des Tanks ein vorstehender Hohlraum vorgesehen ist, und dass eine Ecke des Festbetts in dem Hohlraum angeordnet ist.

2. Tank nach Anspruch 1, **dadurch gekennzeichnet, dass** der Vorsprung (2) Kanten (4) aufweist, die sich von der Spitze (3) zur gebogenen Oberfläche erstrecken.

3. Tank nach Anspruch 2, **dadurch gekennzeichnet, dass** der Vorsprung (2) die Form einer Pyramide hat.

4. Tank nach Anspruch 2 oder 3, **dadurch gekennzeichnet, dass** der Vorsprung (2) vier Kanten aufweist.

5. Tank nach einem der vorhergehenden Ansprüche, **dadurch gekennzeichnet, dass** der Tank (1) hauptsächlich kugelförmig ist und acht Vorsprünge (2) aufweist.

6. Tank nach einem der vorhergehenden Ansprüche, **dadurch gekennzeichnet, dass** der Tank (1) aus Kunststoff besteht.

## Revendications

1. Réservoir de traitement des eaux usées (1) comprenant une structure pour microbes utilisée dans le traitement des eaux usées et ayant une forme courbe telle qu'une paroi du réservoir (1) forme une surface sensiblement courbe, la surface courbe étant non-uniforme de telle manière que la paroi du réservoir (1) est munie d'une saillie (2), **caractérisé en ce que** la structure pour microbes utilisée dans le traitement des eaux usées est un lit fixe, **en ce qu'**au moins une saillie (2) est réalisée sur la surface courbe, la saillie (2) étant munie d'une pointe (3) moyennant quoi, au niveau de la saillie (2), une cavité en protubérance est disposée sur la surface intérieure du réservoir, et **en ce qu'**un coin du lit fixe est agencé dans ladite cavité.

2. Réservoir selon la revendication 1, **caractérisé en ce que** la saillie (2) comporte des bords (4) partant de la pointe (3) vers la surface courbe.

3. Réservoir selon la revendication 2, **caractérisé en ce que** la saillie (2) présente la forme d'une pyramide.

4. Réservoir selon les revendications 2 ou 3, **caractérisé en ce que** la saillie (2) comprend quatre bords.

5. Réservoir selon l'une quelconque des revendications précédentes, **caractérisé en ce que** le réservoir (1) est principalement sphérique, comprenant huit saillies (2).

6. Réservoir selon l'une quelconque des revendications précédentes, **caractérisé en que** le réservoir (1) est fabriqué en plastique.
